# EUROPEAN PATENT SPECIFICATION

(11) **EP 0 668 142 B1**
(45) Date of publication and mention of the grant of the patent: **28.07.1999**
(21) Application number: 94500081.8
(22) Date of filing: 06.05.1994
(51) Int. Cl.: B29C 47/06, B29C 47/40, C08L 23/02, B32B 27/32, B29C 70/02

(54) **Method for coextrusion thermoformable panels**
Koextrusionsverfahren zur Herstellung thermoformbarer Platten
Procédé d'coextrusion de panneaux thermoformables

(30) Priority: 09.02.1994 ES 9400233
(43) Date of publication of application: 23.08.1995
(73) Proprietor: RIBAWOOD, S.A., 50003 Zaragoza (ES)
(72) Inventor: Rivera Ballarin, Carlos, E-50003 Zaragoza (ES)
(74) Representative: Hernandez Covarrubias, Arturo

(56) References cited:
- EP-A- 0 165 093
- EP-A- 0 172 436
- EP-A- 0 292 584
- EP-A- 0 319 589
- EP-A- 0 540 026
- DE-A- 4 009 638
- FR-A- 2 222 208
- GB-A- 1 507 966
- US-A- 4 746 688
- DATABASE WPI Week 8950 Derwent Publications Ltd., London, GB; AN 89-367469 & JP-A-01 275 136 (MITSUI PETROCHEM IND KK) , 2 November 1989
- DATABASE WPI Week 8446 Derwent Publications Ltd., London, GB; AN 84-285330 & JP-A-59 176 045 (KASAI KOGYO KK) , 5 October 1984
- PE PLAST EUROPE, no. 1, April 1993 MUNCHEN DE, pages 48-52, H. KURRER 'Direct Extrusion of Filled Polyolefins'

## Description

The present invention relates to a procedure for the manufacture of laminated thermoformable panels that can be easily moulded by thermoforming, enabling them to be used for producing interior panels for vehicle doors, for making trays, containers for packaging, etc.

The use of panels made of organic materials and made of polymers with organic fillers, that can be formed by heat, is known in the production of interior panels for vehicle doors, trays and other components consisting of formed panels.

As a result of their structure and the components from which they are made, panels of this type are relatively weak and can easily become deformed and deteriorated by mechanical action. Furthermore, the surfaces of these panels have a finish which makes them unsuitable for direct use, making it necessary to carry out finishing operations to improve the quality or visual appeal.

European Patent Office publication no. EP 0 292 584 A1 relates to a method for making panels which may or may not be used for a subsequent molding, to the apparatus for prividing this method and to the panels obtained thereby. The method comprises the steps of forming a mixture of thermoplastic resin and organic filler and the plastification of this mixture performed simultaneously with its formation. During the transfer of the organic filler to the subsequent mixing and plastification step, the same is desiccated and mixed. Moreover, during said mixing and plastification step, the plasticated mixture is transferred to a subsequent extrusion step. The method is carried out in an apparatus including a single device for the continuous production of a sheet of extruded material.

The PE PLAST EUROPE publication of April 1993 discloses the direct extrusion of polyolefins with incorporated fillers with a co-rotating twin screw compounding extruder.

The object of the present invention is a procedure for obtaining thermomouldable panels which have a different structure and which are made of components that enable levels of quality and characteristics which are superior to those of traditional panels to be achieved.

### DESCRIPTION OF THE INVENTION

According to the present invention, the procedure for manufacturing laminated thermoformable panels comprises obtaining, through a process of co-extrusion, a laminate consisting of a matrix or central layer made of a mixture of polyolefins and an organic filler, and two external layers made of polyolefins and a mineral filler, characterized in that said matrix is formed by means of a double-screw counter-rotating extrusion press in which the organic fibers are previously homogenized and gelled pre-mixed with the polyolefins, and in that the external layers are formed simultaneously by co-extrusion by means of a double-screw co-rotating extrusion press.

The panels can be obtained using polymeric polyolefins such as polythene or polypropylene.

The organic filler may consist of cellulosic fibres or particles.

The mineral filler is preferably made of carbonates or talc in powder form.

The organic or mineral fillers form constituent parts of the respective mixtures in proportions of between 40% and 60%.

The thickness of the central layer and the external layers depends upon the characteristics which the panel is required to have.

The procedure of the invention results in a panel consisting of three layers, one central layer made of a homogenized mixture of polyolefins with an organic filler, and two external layers which cover the surfaces of the central layer and which are made of a homogenized mixture of polyolefins with a mineral filler.

The panels obtained by means of the procedure of the invention can be moulded by thermoforming to adopt the desired final shape, such that said procedure can he used to obtain internal panels for vehicle doors, trays, containers, etc., by means of softening and pressing by thermoforming.

The panels obtained by the procedure of the invention have the following advantages:
a) The incorporation of a homogenous mixture consisting of polymeric particles reinforced with organic fibres into the matrix results in mechanical properties, rigidity and a lower heat transfer coefficient than the polymer itself, making it easier to mould.
b) The co-extrusion of the polymeric mixture with a mineral filler onto the matrix mechanically reinforces the substrate, giving it characteristics which improve its tensile strength, modulus of elasticity and resistance to impact and providing both faces with a plastic finish which, as well as improving the viscosity of the surfaces, making it easier to adhere textile coverings etc., enables it to be designed for direct applications, choosing colours and thereby reducing the cost of the production of articles.
c) The nature of the materials used guarantees their full recyclability. The material obtained by this procedure has the following characteristics: resistance to tension, resistance to bending, coefficient of bending elasticity, absorption of water and coefficient of thermal conductivity.

As has already been pointed out, the panel obtained consists of layers which are different in nature and which complement its mechanical characteristics.

A further advantage of the panel of the invention is that it can be manufactured in a single co-extrusion process using co-rotational and counter-rotational extrusion presses.

There follows an example of an embodiment of a panel obtained by the procedure of the invention.

A panel of three laminas or layers was formed by means of the process described: one central lamina or layer comprising a 50/50 ratio of polyolefins and organic fibre end with a thickness of 1.4 mm, and two external layers or laminas comprising a 60/40 ratio of polyolefins and a mineral filler and with a thickness of 0.5 mm.

The technical characteristics of the laminated panel described above are shown in the following table.

| TECHNICAL CHARACTERISTICS | | | |
|---|---|---|---|
| CHARACTERISTIC | STANDARD | DIRECTION | VALUE |
| DENSITY | ISO 1183 | | 1.8 G/CC. |
| DISTORTION TEMPERATURE | ISO 75/A | LONG. | 92.5 C. |
| | | | 91.9 C. |
| RESISTANCE TO TENSION | ISO 8527 STANDARD TEST PIECE i 5 MM/Min. | LONG. | 22.3 N/MM2 |
| | | | 18.3 N/MM2 |
| BREAKING STRAIN | ISO 8527 STANDARD TEST PIECE i 5 MM/Min. | LONG. | 10.1 % |
| | | | 5.6 % |
| RESISTANCE TO BENDING | ISO 178 | LONG. | 53.6 N/MM2 |
| | | | 46.3 N/MM2 |
| BENDING MODULUS OF ELASTICITY | ISO 178 | LONG. | 1600 N/MM2 |
| | | | 1550 N/MM2 |
| ABSORPTION OF WATER | GNE 60351 | LONG. | 0.4 % |
| RESISTANCE TO CHARPY SHOCK | ISO 179 | | 19.5 NJ/M2 |
| | | | 16.4 NJ/M2 |
| BALL DROP TEST | GME 60267 | 23 C. | > 3.0 J |
| | | - 30 C. | > 3.0 |

## Claims

1. A procedure for manufacturing laminated thermoformable panels whereby, through a process of co-extrusion, a laminate consisting of a matrix or central layer made of a mixture of polyolefins and an organic filler, and two external layers made of polyolefins and a mineral filler, is obtained, characterized in that said matrix is formed by means of a double-screw counter-rotating extrusion press in which the organic fibers are previously homogenized and gelled pre-mixed with the polyolefins, and in that the external layers are formed simultaneously by co-extrusion by means of a double-screw co-rotating extrusion press.

2. A procedure according to claim 1, characterized in that the polyolefins used are polymers such as polythene or polypropylene.

3. A procedure according to claim 1, characterized in that the an organic filler consist of cellulosic fibres or particles.

4. A procedure according to claim 1, characterized in that the mineral filler is made of carbonates or talc in powder form.

5. A procedure according to claim 1, characterized in that the mixtures of which the central and external layers are made comprise between 40% and 60% organic or mineral fillers.

## Patentansprüche

1. Verfahren zum Herstellen laminierter, warmformbarer Tafeln, bei dem durch ein Koextrusionsverfahren ein Laminat erhalten wird, das aus einer Matrix oder Zentrallage, die aus einer Mischung von Polyolefinen und einem organischen Füllstoff hergestellt ist, und aus zwei äußeren Lagen besteht, die aus Polyolefinen und einem mineralischen Füllstoff hergestellt sind, dadurch gekennzeichnet, daß die genannte Matrix mittels einer gegenläufigen Doppelschnecken Extruderpresse gebildet wird, in der die organischen Fasern zunächst homogenisiert und geliert mit den Polyolefinen vorgemischt werden, und daß die äußeren Schichten gleichzeitig durch Koextrusion mittels einer gleichläufigen Doppelschnecken-Extruderpresse gebildet werden.

2. Verfahren nach Anspruch 1, dadurch gekennzeichnet, daß die verwendeten Polyolefine Polymerisate wie Polyethylen oder Polypropylen sind.

3. Verfahren nach Anspruch 1, dadurch gekennzeichnet, daß der organische Füllstoff aus Cellulosefasern oder -teilchen besteht.

4. Verfahren nach Anspruch 1, dadurch gekennzeichnet, daß der mineralische Füllstoff aus Carbonaten oder Talkum in Pulverform hergestellt ist.

5. Verfahren nach Anspruch 1, dadurch gekennzeichnet, daß die Mischungen, aus denen die zentrale und die äußeren Lagen hergestellt sind, zwischen 40% und 60% organische oder mineralische Füllstoffe aufweisen.

## Revendications

1. Mode de fabrication de panneaux thermoformables stratifiés de telle sorte que l'on obtienne, par un procédé de coextrusion, un stratifié constitué d'une matrice ou d'une couche centrale faite d'un mélange de polyoléfines et d'une charge organique, et de deux couches extérieures faites à partir de polyoléfines et d'une charge minérale, caractérisé en ce que ladite matrice est formée au moyen d'une presse à extrusion contrarotative à deux vis dans laquelle les fibres organiques sont homogénéisées au préalable et gélifiées en pré-mélange avec les polyoléfines et en ce que les couches extérieures sont formées simultanément par coextrusion au moyen d'une presse à extrusion contrarotative à deux vis.

2. Mode opératoire selon la revendication 1, caractérisé en ce que les polyoléfines utilisées sont des polymères tels que du polyéthylène ou du polypropylène.

3. Mode opératoire selon la revendication 1, caractérisé en ce qu'une charge organique se compose de fibres ou de particules cellulosiques.

4. Mode opératoire selon la revendication 1, caractérisé en ce que la charge minérale est faite à partir de carbonates ou de talc sous forme pulvérulente.

5. Mode opératoire selon la revendication 1, caractérisé en ce que les mélanges à partir desquels sont faites les couches centrale et extérieures comprennent de 40 à 60 % de charges organiques ou minérales.
